# EUROPEAN PATENT SPECIFICATION

(11) **EP 4 219 955 B1**
(45) Date of publication and mention of the grant of the patent: **11.11.2026**
(21) Application number: 23150232.9
(22) Date of filing: 04.01.2023
(51) Int. Cl.: F04D 29/52, F01D 21/04, F02C 7/05, F04D 29/02

(54) **IMPACT-RESISTANT FAN CASING**
SCHLAGFESTES BLÄSERGEHÄUSE
CARTER DE SOUFFLANTE RÉSISTANT AUX CHOCS

(30) Priority: 26.01.2022 GB 202200980
(43) Date of publication of application: 02.08.2023
(73) Proprietor: Rolls-Royce plc, London N1 9FX (GB)
(72) Inventor: Beckham, Mark, Derby, DE24 8BJ (GB); Hall, Richard, Derby, DE24 8BJ (GB)
(74) Representative: Rolls-Royce plc

(56) References cited:
- WO-A1-2020/011617
- US-A1- 2018 230 855
- US-A1- 2019 136 711

## Description

### FIELD

The present invention provides a fan casing for an aircraft engine.

### BACKGROUND

One of the important functions of the casing around an aircraft engine is to absorb the impact of all or part of a fan blade in the event of fracture or damage, for example caused by a bird being ingested into the engine. To fulfil this function, the casing must be able to absorb large amounts of energy so as to prevent any debris, such as blade fragments, from exiting the engine. However, the design of the fan casing is also constrained by weight, as the heavier a fan casing is, the more costly it is to fly. Therefore when it comes to fragment capture, the goal is to provide the best safety performance with the lightest possible hardware.

WO 2020/011617 A1 discloses a structural support casing for supporting a fan track liner of a gas turbine engine. The structural support casing comprises at least one region in which two or more sub-laminates of fibre-reinforced composite material are spaced apart from one another by layers of cellular material.

US 2019/136711 A1 discloses a multiple layer fan casing surrounding a fan. The multiple layers comprise an inner carbon fiber layer and an outer fiber layer. A glass layer is sandwiched between the inner and outer fiber layers.

US 2018/0230855 A1 discloses a fan containment case for a gas turbine engine having an outermost portion, an innermost portion and an interior portion between the innermost portion and the outermost portion. The interior portion comprises a first interior band made from poly p-phenylene-2,6-benzobisoxazole (PBO) and an adjacent second interior band made of an aramid material.

The present invention provides a fan casing which improves upon designs of the prior art, providing improved debris retention properties whilst also being lightweight in design.

### SUMMARY

The present invention concerns an engine comprising a fan and fan casing as set out in claim 1 and an aircraft comprising such an engine as set out in claim 14.

According to a first aspect there is provided an engine comprising a fan and a fan casing, the fan comprising fan blades that each have a centre of gravity (CoG) that lies on a fan blade CoG plane, the fan casing having a central axis, a forward end, a rearward end, and comprising a main impact region, the main impact region having an axial extent with respect to the central axis of the fan casing such that the minimum axial extent of the main impact region is from a first boundary plane to a second boundary plane, wherein the first boundary plane is a plane normal to the central axis of the fan casing extending from the points where a forward limiting plane intersects a fan casing interior surface, the forward limiting plane being a conical plane with the base of the cone being the point where the forward limiting plane intersects the central axis of the fan casing, with the cone of the forward limiting plane having an angle θ₁ to the fan blade CoG plane, where the angle θ₁ equals 8 degrees, and wherein the second boundary plane is a plane also normal to the central axis of the fan casing extending from the points where a rearward limiting plane intersects a fan casing interior surface, the rearward limiting plane being a conical plane with the base of the cone being the point where the rearward limiting plane and the forward limiting plane intersect the central axis of the fan casing, with the cone of the rearward limiting plane having an angle θ₂ to the fan blade CoG plane, where the angle θ₂ equals 9 degrees;
the main impact region comprising:
   at least three carbon-fibre reinforced polymer (CFRP) blocks having a constant thickness throughout the axial extent of the main impact region when viewed in cross-section;
   glass-fibre reinforced polymer (GFRP) blocks having a constant thickness throughout the axial extent of the main impact region when viewed in cross-section; and
   a neutral axis extending across the axial extent of the main impact region, the neutral axis being positioned at half the total depth of the main impact region, wherein the total depth of the main impact region is equal to the sum of the thicknesses of the CFRP blocks and GFRP blocks within the main impact region;
wherein, each of the GFRP blocks is positioned between two CFRP blocks; and the thickness of at least one of the GFRP blocks is different to the thickness of another of the GFRP blocks.

Having CFRP blocks at the bounds of the region provides high strength blocks which prevent any debris that impacts on the case from exiting the case; the different thicknesses of GFRP blocks within the region provide lower stiffnesses but allow increased deflection when impacted by debris. A fan case having a combination of such features can exhibit improved energy dispersion within the impact region.

The arrangement of the thicknesses of the GFRP and CFRP blocks in the fan casing may be symmetrical about the neutral axis of the main impact region.

The neutral axis of the fan casing may pass through one of the GFRP blocks. Having a central GFRP block enveloping the neutral axis can amplify the flexural modulus of the impact region, leading to a region of fan casing with an improved energy dispersion rate for enhanced impact resistance.

The main impact region of the fan casing may consist of four CFRP blocks and three GFRP blocks.

The thickest of the plurality of GFRP blocks of the fan casing may be bisected by the neutral axis.

The GFRP blocks furthest from the neutral axis of the fan casing may be the thinnest of the GFRP blocks.

The CFRP blocks sandwiching the thickest of the GFRP blocks of the fan casing may be the same thickness as the thickest of the GFRP blocks.

The GFRP blocks furthest from the neutral axis of the fan casing may be half as thick as the GFRP block bisected by the neutral axis.

The CFRP blocks of the fan casing may be the same thickness.

The thickness of at least one of the at least three CFRP blocks of the fan casing may be different to the thickness of another of the at least three CFRP blocks.

The CFRP blocks furthest from the neutral axis of the fan casing may be the thinnest of the CFRP blocks.

The GFRP blocks adjacent to the CFRP blocks furthest from the neutral axis of the main impact region of the fan casing may be the same thickness as the CFRP blocks furthest from the neutral axis of the main impact region.

The CFRP blocks and/or the GFRP blocks of the fan casing may be composed of 2D interwoven ply tapes.

According to a second aspect, there is provided an aircraft comprising an engine according to the first aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DISCRIPTION OF THE DRAWINGS

Embodiments will now be described by way of example only, with reference to the Figures, in which:
**Figure 1** is a sectional side view of a gas turbine engine;
**Figure 2** is a sectional side view of an electric aircraft engine;
**Figure 3** is a sectional view of region A outlined in figures 1 and 2;
**Figure 4** is a second sectional view of region A outlined in figures 1 and 2;
**Figure 5** is a sectional view of region C outlined in figure 4;
**Figure 6** is a sectional view of region B outlined in figure 3 showing a first embodiment of the present invention;
**Figure 7** is a sectional view of region B outlined in figure 3 showing a second embodiment of the present invention;
**Figure 8** is a sectional view of region B outlined in figure 3 showing a third embodiment of the present invention;
**Figure 9** is a sectional view of region B outlined in figure 3 showing a fourth embodiment of the present invention;
**Figure 10** is a sectional view of region B outlined in figure 3 showing a fifth embodiment of the present invention;
**Figure 11** is a sectional view of region B outlined in figure 3 showing a sixth embodiment of the present invention;
**Figure 12** is a sectional view of region B outlined in figure 3 showing a seventh embodiment of the present invention;
**Figure 13** is a sectional view of region B outlined in figure 3 showing an eighth embodiment of the present invention;
**Figure 14** is a sectional view of region B outlined in figure 3 showing a ninth embodiment of the present invention;
**Figure 15** is a sectional view of region B outlined in figure 3 showing a tenth embodiment of the present invention; and
**Figure 16** is a sectional view of region B outlined in figure 3 showing an eleventh embodiment of the present invention.

### DETAILED DESCRIPTION

Aspects and embodiments of the present invention will now be discussed with reference to the accompanying figures. Further aspects and embodiments will be apparent to those skilled in the art.

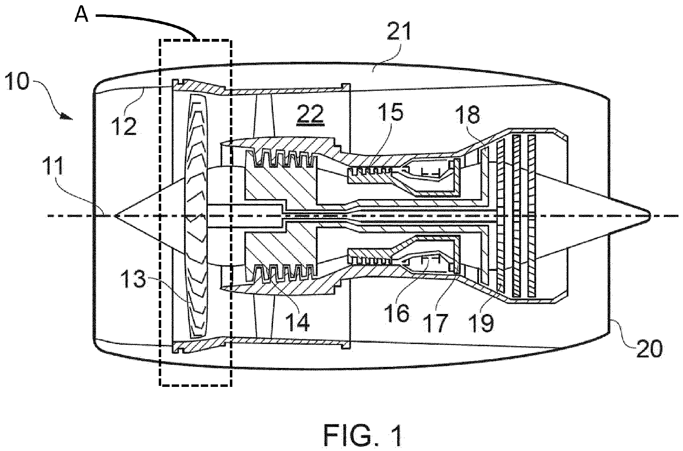

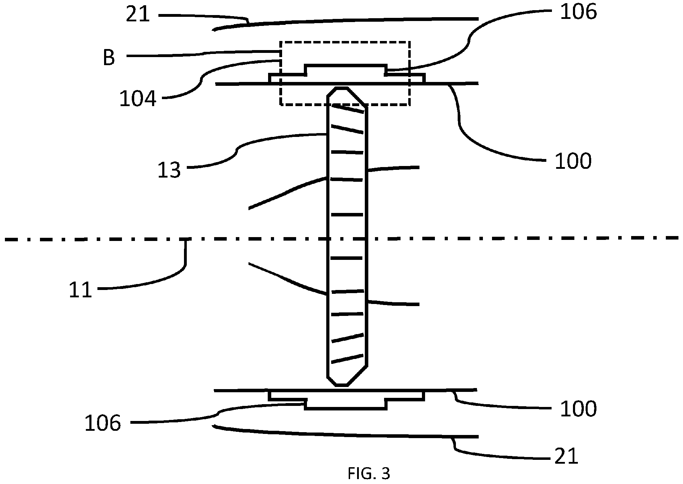

**Figure 1** shows an example of an aircraft engine, in this case a gas turbine engine. The engine is generally indicated at 10. The engine 10 comprises, in axial flow series, an air intake 12, a fan 13 for propulsion, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20. Within the nacelle 21 adjacent to the fan 13 there is a section of fan casing 100 (see figure 3). The fan casing has a generally cylindrical form, and as such has a central axis 11 running through the centre of the cylindrical form. When installed on an engine 10 as part of the nacelle 21, a forward end of the fan casing is the end nearest to the air intake 12, and the rearward end of the fan casing is the end nearest to the exhaust nozzle 20. When installed on an engine 10 as part of the nacelle 21, the central axis 11 of the fan casing 100 will generally overlap, and be coincident with, the rotational axis of the engine it is fitted to.

The engine 10 shown in figure 1 works in the conventional manner for a gas turbine engine, so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate, and low-pressure turbines 17, 18, 19 before being exhausted through the exhaust nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

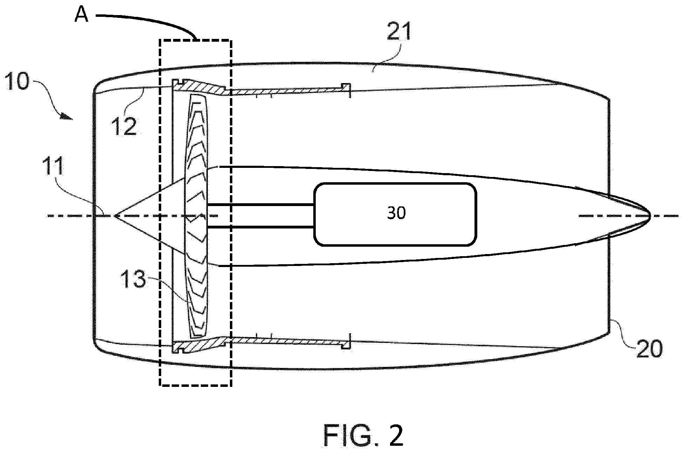

Other engines to which the present invention may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan. Further engines may be electric, and as such the gas turbine components are replaced with an electric motor, as illustrated in **figure 2****.** **Figure 3** is a sectional view of the region indicated by box A in figures 1 & 2, and shows the section of the engine around the fan 13, which includes the sections at the top and bottom of the nacelle 21, including sections of the fan casing 100. If a fragment of a fan blade detaches during operation, then it will travel towards the surrounding region, contacting the impact region 104, of the fan casing 100. Within the impact region 104 is a main impact region 106 adjacent to the fan, which is designed to absorb the released blade fragment impact energy ensuring that any debris is safely contained within the fan casing 100. In figure 3, the main impact region 106 is schematically shown as being slightly thicker than the neighbouring regions of the fan containment casing 100. For composite containment casings this is physically accurate, as the main impact region 106 comprises more material than the regions surrounding it in order to better contain and absorb energy from fan blade fragments.

For the purposes of this invention, the nature of the impact region surrounding the main impact region can comprise various configurations as known in the art. This invention is concerned with the configuration of the main impact region, as defined below.

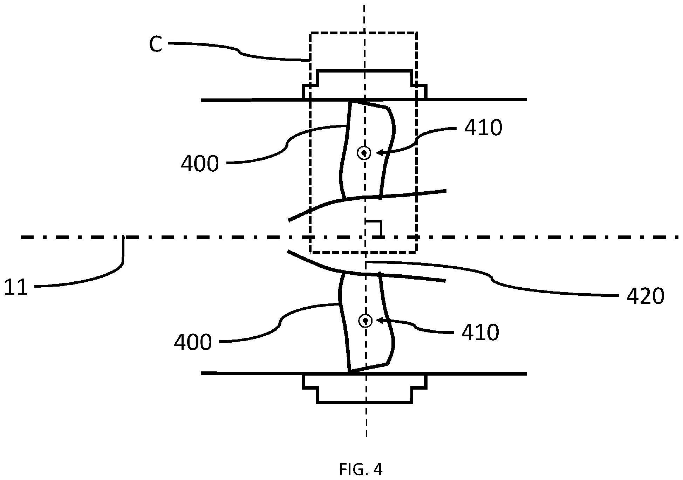

**Figure 4** shows a similar sectional view of an engine 10 to that of figure 3. For clarity, figure 4 shows two fan blades 400 of the fan 13. Each of the fan blades 400 has a centre of gravity (CoG) 410, which, within manufacturing tolerances of the blades, is in the same relative position for each of the fan blades 400. As the fan blades are all mounted around the fan 13 in a similar manner, the fan blade CoGs will all lie on a blade CoG plane 420. Because the fan is designed to rotate around a rotational axis, which is coincident with the central axis 11 of the fan casing 100 when the fan casing is installed upon the engine 10, the central axis 11 is normal to the blade CoG plane 420 on which all of the CoGs of the fan blades 400 lie.

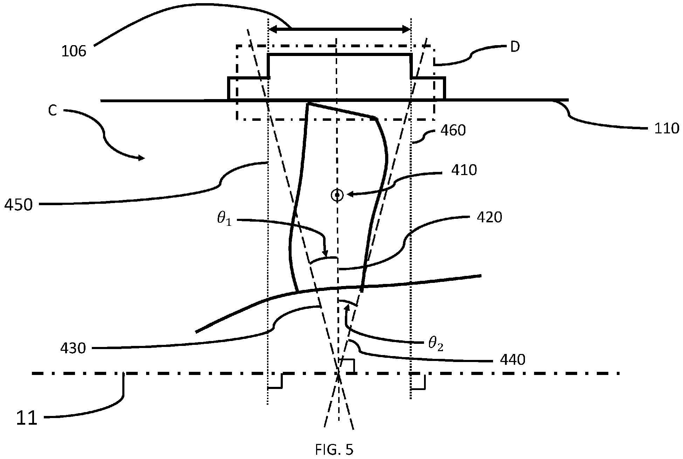

The axial extent of the main impact region 106 is defined as shown in **figure 5****,** which shows the area highlighted by the box C in Figure 4. The central axis 11 and the blade CoG plane 420 are shown. As can be seen, the fan blade CoG plane passes through the main impact region 106 of the fan casing 100. A forward limiting plane 430, and a rearward limiting plane 440 are indicated. The forward limiting plane 430 is a conical plane, with the vertex of the cone being at the point where the forward limiting plane 430 intersects the central axis 11 of the fan casing 100 (which is the same point as where the blade CoG plane 420 intersects the central axis), and the sides of the cone being angled forwards, towards the section of the fan casing 100 nearest to the intake 12 of the engine 10, by an angle θ₁ from the blade CoG plane 420. The rearward limiting plane 440 is also a conical plane, with the vertex of the cone again being at the point where the rearward limiting plane 440 intersects the central axis 11 of the fan casing 100 (which is the same point where the forward limiting plane 430 intersects the central axis 11 of the fan casing 100), with the sides of the cone angled backwards, towards the section of the fan casing 100 nearest to the exhaust nozzle 20 of the engine 10, by an angle θ₂ from the blade CoG plane 420. In this exemplary embodiment, the minimum angle θ₁ between the forward limiting plane 430 and the blade CoG plane 420, equals 8 degrees, while the minimum angle θ₂ between the rearward limiting plane 440 and the blade CoG plane 420, equals 9 degrees. It will be understood that the axial extent of the main impact region can be adjusted for different engine designs, depending on at least necessary angular coverage and desired fan casing 100 mass. For each section of the fan casing, the point where the forward limiting plane 430 intersects the fan casing interior surface 110 marks the position of a first boundary plane 450 for that section of the fan casing. The first boundary plane 450 is a flat plane normal to the central axis 11 of the casing 100. Equally, the point where the rearward limiting plane 440 intersects the fan casing interior surface 110 marks the position of a second boundary plane 460, which is also a flat plane normal to the central axis 11 of the casing 100. For a given section of the fan casing, the minimum axial extent of the main impact region 106 is from the first boundary plane 450 to the second boundary plane 460. In this way the main impact region encompasses the expected trajectories, based on θ₁, θ₂, and the CoG of the fan blades, of any blade fragments that may inadvertently be released from the fan 13.

It will be understood by the skilled person that the fan casing can have various configurations. For simplicity, in the figures the fan casing sections are shown as having parallel fan casing interior surfaces, such as would be the case for a substantially cylindrical fan case. It will however be clear to the skilled person that the fan casing interior surfaces may be divergent, convergent, parallel, or some combination of the three, depending on the design of the fan case. Regardless, the definitions used to determine the minimum axial extent of the main impact region are still applicable.

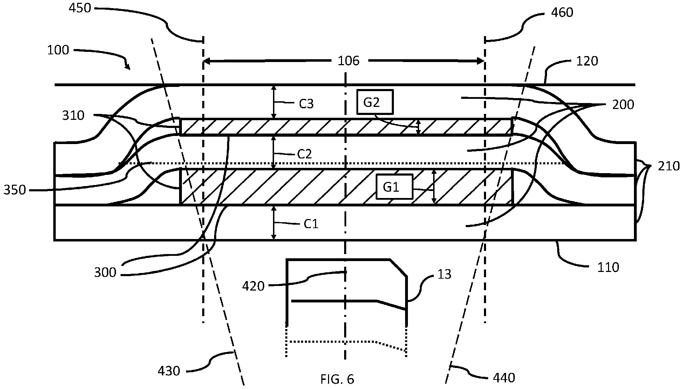

**Figure** 6 shows a sectional view of the region D of figure 5 for a first example embodiment of the present invention, specifically how the materials used to make the fan casing 100 in the main impact region 106 can be arranged to provide improved debris containment whilst also being lightweight in design. It will be understood that whilst box D and the examples shown are with relation to the top of the fan casing section, the same design will apply to the full 360° circumference of the fan casing. The fan casing 100 generally has an interior abradable liner adjacent to the fan as is known in the prior art. For purposes of clarity, the abradable lining is not shown in the examples, and does not count towards the arrangements of materials described herein.

Figures 6 to 16 also show the neutral axis, which is a ring around the fan casing which marks the boundary between the radially inner 50% of the main impact region and the radially outer 50% of the main impact region, the radial extent of the main impact region being bounded by the fan casing interior surface 110 and fan casing exterior surface 120 in figures 6 to 16.

In the example of figure 6, the fan casing 100 is shown as having five layers of two types: carbon-fibre reinforced polymer (CFRP) layers 210 (shown as solid shapes), and glass-fibre reinforced polymer (GFRP) layers 310 (shown as shapes with diagonal lines through them). Other examples have different numbers of layers. Whist it is possible for the thickness of each layer to vary in different locations, for the purposes of this invention, the thicknesses of the CFRP layers and the GFRP layers are constant within the main impact region 106. As such, the part of each layer within the bounds of the main impact region is referred to as a "block", such that each block's thickness does not vary within the axial extent of the main impact region. The CFRP blocks 200 alternate with the GFRP blocks 300, such that each GFRP block is sandwiched between two CFRP blocks. In figure 6, the main impact region 106 is shown as extending axially between the first boundary plane 450 and the second boundary plane 460, even though the CFRP layers 210 and GFRP layers 310 extend axially beyond the first boundary plane 450 and second boundary plane 460. As explained above, the first boundary plane 450 and second boundary plane 460 mark the minimum axial extent of the main impact region 106, meaning it is perfectly acceptable for the CFRP layers 210 and/or the GFRP layers 310 to extend axially beyond the first boundary plane 450 and/or second boundary plane 460 whilst the CFRP blocks 200 and GFRP block 300 still fulfil the requirements of the invention.

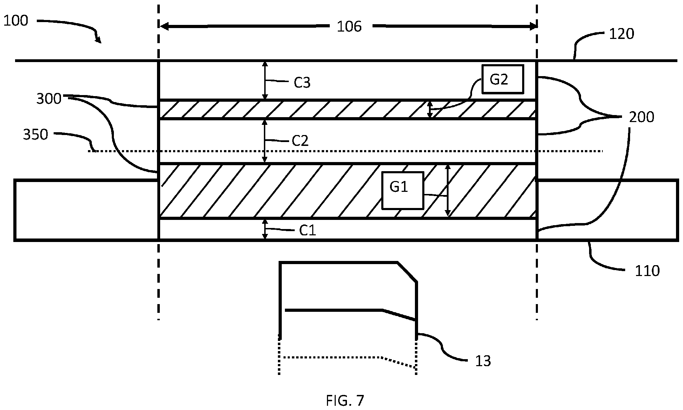

In the embodiment of Figure 6, the GFRP layers 310, which comprise both the GFRP blocks 300 (i.e. the sections of each of the GFRP layers within the main impact region) and the sections of GFRP layers outside of the main impact region, are shown as terminating just outside of the main impact region, whereas the CFRP layers 210, which comprise both the CFRP blocks 200 (i.e. the sections of each of the CFRP layers within the main impact region) and the sections of CFRP layers outside of the main impact region, continue on axially forward and rearward after the GFRP layers have terminated, and therefore are brought into contact with each other outside of the main impact region 106. In figures 7 to 16 illustrating further example embodiments of the invention, the parts of the CRFP layers 210 and GFRP layers 310 outside of the main impact region 106 have been omitted for clarity, as the invention is only concerned with the arrangement of the blocks 200,300 within the main impact region 106.

In the example of figure 6, the CFRP blocks 200 are part of the outermost layers, i.e. the block closest to the fan casing interior surface 110, and the block closest to the fan casing exterior surface 120, as shown in the figures. By combining the greater ductility of the GFRP blocks with the high strength and stiffness of the CFRP blocks, the flexural modulus of the laminate is enhanced compared with an impact region consisting entirely of CFRP blocks. Specifically, in figure 6, the CFRP blocks 200 are positioned at the outermost layers where high strength is required, whilst the GFRP blocks 300 have been divided into blocks having thicknesses G1, G2 which are not the same. Such an arrangement can improve energy dispersion within the impact region. In figure 6, the CFRP blocks have thicknesses C1, C2, C3 which are all the same.

In the example embodiments described herein, the blocks consist of 2D interwoven ply tapes, wherein the tapes making up the blocks are laid up on top of one another with spaces between the tapes making up a sublayer, and the tapes of one sublayer being laid at an angle compared to tapes of a different sublayer. An example of such a construction method can be found in United Kingdom patent GB 2485215 B, herein incorporated by reference. The skilled person will understand that this is not an essential feature, and that any suitable method for constructing the blocks 200, 300 can be used. Equally, the blocks themselves are not interlocked, but rather they are separate and laid on top of one another, prior to curing. The plies used to make up the CFRP blocks 200 and GFRP blocks 300 are made using the same resin, so that the once the CFRP and GFRP blocks have been arranged, they can be cured as one in a single curing process.

Figures 7 to 16 are sectional views of further different examples of embodiments of the present invention, which are shown with reference to the region indicated by box D in Figure 5.

**Figure** 7 shows an example of an alternative embodiment, which varies from the embodiment of figure 6 in that the CFRP blocks 200 do not all have the same thickness. In the example shown, the CFRP block nearest the fan casing interior surface 110 has a first thickness C1 which is less than the thicknesses C2, C3 of the remaining two CFRP blocks. The GFRP blocks 300 are again not of the same thickness.

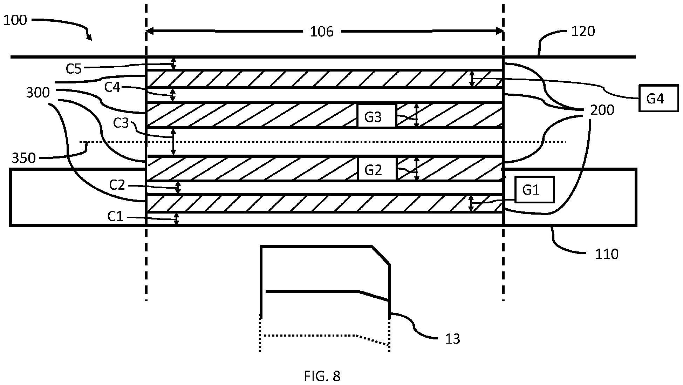

**Figure** 8 shows an example of an alternative embodiment where the GFRP has been further split, so that in this example it comprises four blocks 300. The GFRP blocks have been distributed symmetrically around the impact region's neutral axis 350. The CFRP blocks 200 do not all have the same thickness. In this case the middle CFRP block has a thickness C3 greater than the thicknesses C1, C2, C4, C5 of the remaining CFRP blocks. As with the example of Figures 6 and 7, the GFRP blocks 300 do also not all have the same thickness, the thicknesses G2, G3 of the GFRP blocks nearest the neutral axis 350 being greater than the thicknesses G1, G4 of the GFRP blocks furthest from the neutral axis.

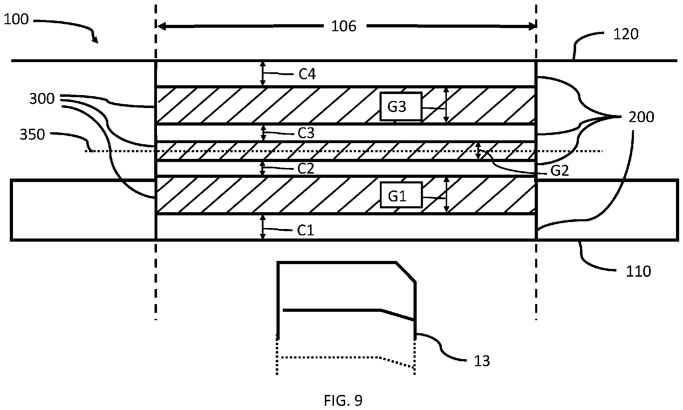

In the exemplary embodiment of **figure 9****,** the CFRP blocks 200 and GFRP blocks 300 are once again arranged symmetrically about the neutral axis 350, but in this example it is a GFRP block that has the neutral axis passing through it. Having a GFRP block enveloping the neutral axis 350 amplifies the flexural modulus of the main impact region 106, further improving its impact capability. As with the examples of figures 7 and 8, both the CFRP blocks 200 and the GFRP blocks 300 are made up of blocks not all having the same thickness. In this example, the thinnest CFRP blocks are nearest to the neutral axis, and the thickest CFRP blocks are furthest from the neutral axis. Also, the thinnest GFRP block is nearest the neutral axis (in this example, enveloping the neutral axis), whereas the thickest GFRP blocks are the GFRP blocks furthest from the neutral axis.

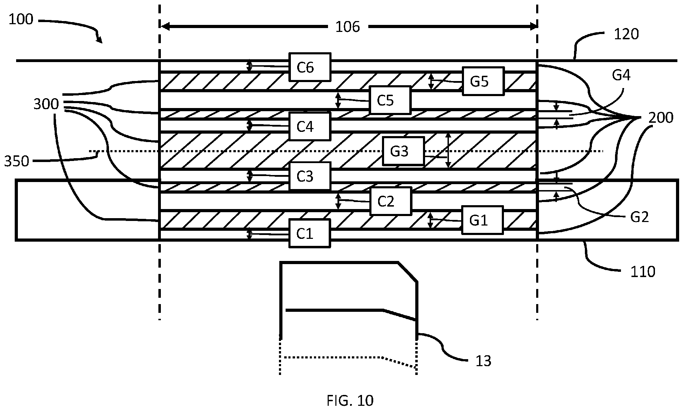

**Figure 10** shows an example of an embodiment where the GFRP block enveloping the neutral axis 350 is the thickest of the GFRP blocks in the main impact region 106. As with the examples of figures 7, 8, and 9, the CFRP blocks 200 and GFRP blocks 300 are not all of the same thickness, and are arranged symmetrically around the neutral axis 350. In the example of figure 10, there are five GFRP blocks 300 having thicknesses G1, G2, G3, G4 and G5, where the GFRP block enveloping the neutral axis 350 has a thickness G3 which is greater than the thicknesses G1, G5 of each of the GFRP blocks furthest from the neutral axis, and greater than the thicknesses G2, G4 of each of the GFRP blocks intermediate between the GFRP block enveloping the neutral axis and the GFRP blocks furthest from the neutral axis. There are six CFRP blocks 200 having thicknesses C1, C2, C3, C4, C5 and C6, the CFRP blocks closest to the neutral axis having thicknesses C3, C4 which are equal to the thicknesses C1, C6 of the CFRP blocks of the outermost layers, i.e. the layer closest to the fan casing interior surface 110 and the layer closest to the fan casing exterior surface 120 as seen in figure 10.

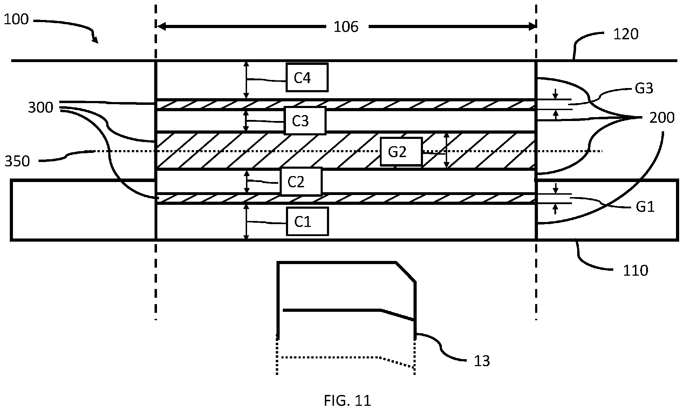

**Figure 11** shows an example of an embodiment where the GFRP blocks which are furthest from the neutral axis 350 are the thinnest of the GFRP blocks within the main impact region 106. The GFRP block enveloping the neutral axis 350 has a thickness G2 which is greater than the thicknesses G1 and G3 of the GFRP blocks which are furthest from the neutral axis 350 within the impact region. In this embodiment there are no further GFRP blocks within the impact region, and as such the GFRP blocks furthest from the neutral axis are the thinnest of the plurality of GFRP blocks. Equally, additional GFRP blocks could be incorporated into the impact region, but in this embodiment they would be closer to the neutral axis, and thicker than, the GFRP blocks furthest from the neutral axis, so that the GFRP blocks furthest from the neutral axis would continue to be the thinnest of the plurality of GFRP blocks.

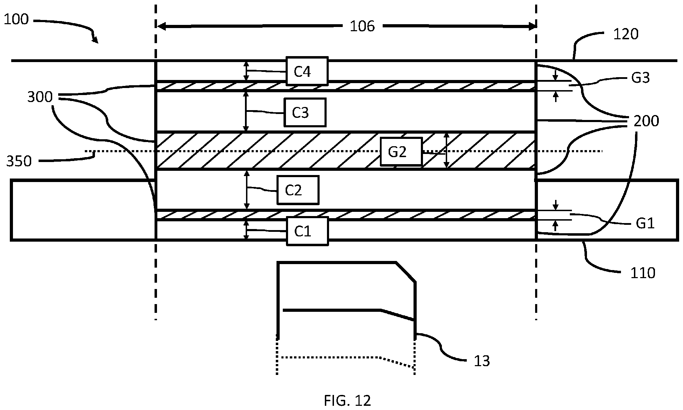

**Figure 12** shows an example of an embodiment sharing many of the same features as Figure 11, in that the GFRP blocks which are furthest from the neutral axis 350 are the thinnest of the GFRP blocks within the main impact region 106, the GFRP block enveloping the neutral axis 350 has a thickness G2 which is greater than the thicknesses G1 and G3 of the GFRP blocks which are furthest from the neutral axis 350 within the impact region, and the CFRP blocks 200 and GFRP blocks 300 are arranged symmetrically around the neutral axis 350, with the thickest of the GFRP blocks 200 enveloping the neutral axis. In contrast to figure 11, in the example embodiment shown in figure 12 the CFRP blocks furthest from the neutral axis 350 are the thinnest of the CFRP blocks 200 included within the main impact region 106.

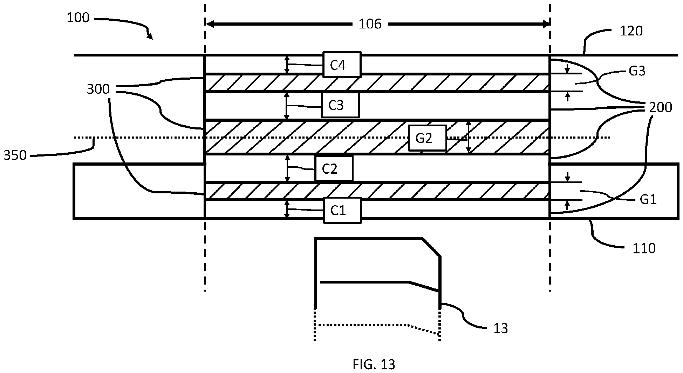

**Figure 13** shows an example of an embodiment where the GFRP blocks which are furthest from the neutral axis 350 are the thinnest of the GFRP blocks within the main impact region 106, the GFRP block enveloping the neutral axis 350 has a thickness G2 which is greater than the thicknesses G1 and G3 of the GFRP blocks which are furthest from the neutral axis 350 within the impact region, and the CFRP blocks 200 and GFRP blocks 300 are arranged symmetrically around the neutral axis 350, with the thickest of the GFRP blocks 200 enveloping the neutral axis. In addition, the thicknesses G1, G3 of the GFRP blocks furthest from the neutral axis 350 are the same as the thicknesses C1, C4 of the CFRP blocks furthest from the neutral axis within the main impact region 106.

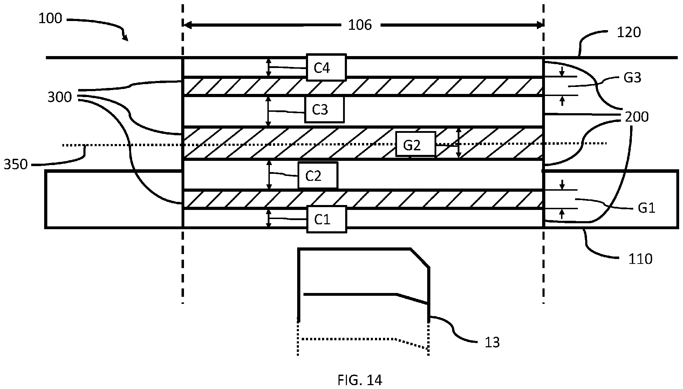

**Figure 14** shows an example of a further embodiment where the GFRP blocks which are furthest from the neutral axis 350 are the thinnest of the GFRP blocks within the main impact region 106, the GFRP block enveloping the neutral axis 350 has a thickness G2 which is greater than the thicknesses G1 and G3 of the GFRP blocks which are furthest from the neutral axis 350 within the impact region, and the CFRP blocks 200 and GFRP blocks 300 are arranged symmetrically around the neutral axis 350, with the thickest of the GFRP blocks 200 enveloping the neutral axis. In addition, the CFRP blocks sandwiching the thickest of the plurality of GFRP blocks have thicknesses C2, C3 equal to the thickness G2 of the thickest of the plurality of GFRP blocks. The thickest of the GFRP blocks in the main impact region 106 has a thickness G2. The CFRP blocks sandwiching it have thicknesses C2, C3 which are equal to each other and G2.

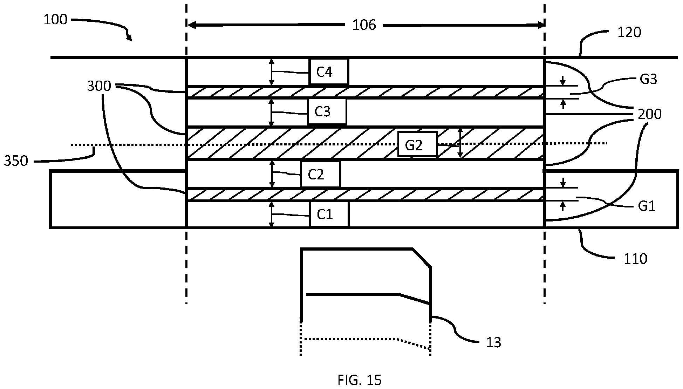

**Figure 15** shows an example of a further embodiment where each of the CFRP blocks 200 are equal in thickness. In this example of the embodiment, the CFRP blocks 200 have thicknesses C1, C2, C3, C4 equal to each other and the thickness G2 of the thickest GFRP block, but each of the CFRP blocks having the same thickness as the thickest of the GFRP blocks is not an essential feature of this embodiment. As with Figure 14, the CFRP blocks and the GFRP blocks are shown as being symmetrically arranged around the neutral axis, but this is also not an essential feature of this embodiment.

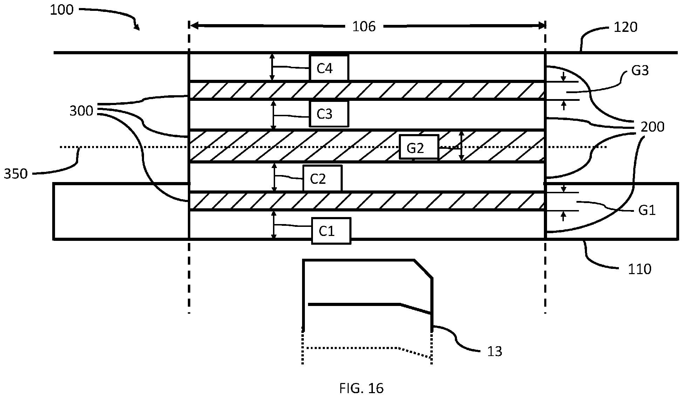

**Figure 16** shows an example of a further embodiment where there are three GFRP blocks 300. The GFRP blocks furthest from the neutral axis 350 have thicknesses G1, G3 which are equal to each other, and half as thick as the thickness G2 of the GFRP block nearest the neutral axis 350, which in this example is bisected by the neutral axis, and therefore centrally located within the radial extent of the main impact region 106 between the fan casing interior surface 110 and fan casing exterior surface 120. In this example, the arrangement of the CFRP blocks 200 and the GFRP blocks 300 are such that they are symmetrical about the neutral axis 350. There are four CFRP blocks, and their thicknesses C1, C2, C3, C4 are all equal. Having the thickest of the GFRP blocks radially centrally located within the impact region, and additional, GFRP blocks of half the thickness of the thickest GFRP block situated further towards the edges of the main impact region 106, but with CFRP blocks bounding the impact region (i.e. being the blocks nearest to the fan casing interior surface 110 and fan casing exterior surface 120), has been found to provide improved energy dispersion and debris retention compared to fan casings of the prior art. The CFRP blocks at the bounds of the region provide high strength regions to prevent any debris that impacts on the case from exiting the case; the GFRP blocks provide regions of lower stiffness but higher deflection; and the central GFRP block enveloping the neutral axis 350 amplifies the flexural modulus of the impact region, leading to a region of fan casing with an improved energy dispersion rate for enhanced impact resistance.

## Claims

1. An engine (10) comprising a fan (13) and a fan casing (100), the fan (13) comprising fan blades (400) that each have a centre of gravity (CoG) (410) that lies on a fan blade CoG plane (420), the fan casing having a central axis (11), a forward end, a rearward end, and comprising a main impact region (106), the main impact region having an axial extent with respect to the central axis of the fan casing such that the minimum axial extent of the main impact region is from a first boundary plane (450) to a second boundary plane (460), wherein the first boundary plane (450) is a plane normal to the central axis of the fan casing, extending from the points where a forward limiting plane (430) intersects a fan casing interior surface (110), the forward limiting plane (430) being a conical plane with the vertex of the cone being the point where the fan blade CoG plane (420) intersects the central axis (11) of the fan casing (100), with the cone of the forward limiting plane (430) having an angle θ₁ to the fan blade CoG plane (420), where the angle θ₁ equals 8 degrees, and wherein the second boundary plane (460) is a plane also normal to the central axis of the fan casing, extending from the points where a rearward limiting plane (440) intersects a fan casing interior surface (110), the rearward limiting plane (440) being a conical plane with the vertex of the cone being the point where the fan blade CoG plane (420) and the forward limiting plane (430) intersect the central axis (11) of the fan casing (100), with the cone of the rearward limiting plane (440) having an angle θ₂ to the fan blade CoG plane (420), where the angle θ₂ equals 9 degrees;
the main impact region (106) comprising:
at least three carbon-fibre reinforced polymer (CFRP) blocks (200) having a constant thickness throughout the axial extent of the main impact region when viewed in cross-section;
glass-fibre reinforced polymer (GFRP) blocks (300) having a constant thickness throughout the axial extent of the main impact region when viewed in cross-section; and
a neutral axis (350) extending across the axial extent of the main impact region, the neutral axis being positioned at half the total depth of the main impact region, wherein the total depth of the main impact region is equal to the sum of the thicknesses of the CFRP blocks (200) and GFRP blocks (300) within the main impact region;
wherein, each of the GFRP blocks is positioned between two CFRP blocks; and
the thickness of at least one of the GFRP blocks is different to the thickness of another of the GFRP blocks.

2. The engine of claim 1, wherein the arrangement of the thicknesses of the GFRP blocks (300) and CFRP blocks (200) is symmetrical about the neutral axis (350) of the main impact region.

3. The engine of claim 1 or 2, wherein the neutral axis (350) passes through one of the GFRP blocks.

4. The engine of any preceding claim, wherein the main impact region (106) consists of four CFRP blocks (200) and three GFRP blocks (300).

5. The engine of any preceding claim, wherein the thickest of the GFRP blocks is bisected by the neutral axis (350).

6. The engine of any preceding claim, wherein the GFRP blocks furthest from the neutral axis are the thinnest of the GFRP blocks (300).

7. The engine of any preceding claim, wherein the CFRP blocks sandwiching the thickest of the GFRP blocks are the same thickness as the thickest of the GFRP blocks.

8. The engine of any preceding claim, wherein the GFRP blocks furthest from the neutral axis (350) are half as thick as the GFRP block bisected by the neutral axis.

9. The engine of any preceding claim, wherein all the CFRP blocks (200) are of the same thickness.

10. The engine of any one of claims 1 to 8, wherein the thickness of at least one of the CFRP blocks is different to the thickness of another of the CFRP blocks.

11. The engine of claim 10, wherein the CFRP blocks furthest from the neutral axis are the thinnest of the CFRP blocks.

12. The engine of any preceding claim, wherein the GFRP blocks adjacent to the CFRP blocks furthest from the neutral axis (350) of the main impact region (106) are the same thickness as the CFRP blocks furthest from the neutral axis of the main impact region.

13. The engine of any preceding claim, wherein the CFRP blocks (200) and/or the GFRP blocks (300) are composed of 2D interwoven ply tapes.

14. An aircraft comprising an engine (10) of any preceding claim.

## Patentansprüche

1. Triebwerk (10), umfassend einen Fan (13) und ein Fangehäuse (100), wobei der Fan (13) Fanschaufeln (400) umfasst, die jeweils einen Schwerpunkt (CoG) (410) aufweisen, der auf einer Fanschaufel-CoG-Ebene (420) liegt, wobei das Fangehäuse eine zentrale Achse (11), ein vorderes Ende, ein hinteres Ende aufweist und einen Hauptschlagbereich (106) umfasst, wobei der Hauptschlagbereich eine axiale Erstreckung in Bezug auf die zentrale Achse des Fangehäuses aufweist, sodass die minimale axiale Erstreckung des Hauptschlagbereichs von einer ersten Begrenzungsebene (450) zu einer zweiten Begrenzungsebene (460) verläuft, wobei die erste Begrenzungsebene (450) eine Ebene ist, die senkrecht zu der zentralen Achse des Fangehäuses ist und die sich von den Punkten erstreckt, an denen eine vordere Begrenzungsebene (430) eine innere Oberfläche (110) des Fangehäuses schneidet, wobei die vordere Begrenzungsebene (430) eine konische Ebene ist, wobei die Spitze des Konus der Punkt ist, an dem die Fanschaufel-CoG-Ebene (420) die zentrale Achse (11) des Fangehäuses (100) schneidet, wobei der Konus der vorderen Begrenzungsebene (430) einen Winkel θ₁ zu der Fanschaufel-CoG-Ebene (420) aufweist, wobei der Winkel θ₁ gleich 8 Grad ist, und wobei die zweite Begrenzungsebene (460) eine Ebene ist, die ebenfalls senkrecht zu der zentralen Achse des Fangehäuses ist und die sich von den Punkten erstreckt, an denen eine hintere Begrenzungsebene (440) eine innere Oberfläche (110) des Fangehäuses schneidet, wobei die hintere Begrenzungsebene (440) eine konische Ebene ist, wobei die Spitze des Konus der Punkt ist, an dem die Fanschaufel-CoG-Ebene (420) und die vordere Begrenzungsebene (430) die zentrale Achse (11) des Fangehäuses (100) schneiden, wobei der Konus der hinteren Begrenzungsebene (440) einen Winkel θ₂ zu der Fanschaufel-CoG-Ebene (420) aufweist, wobei der Winkel θ₂ gleich 9 Grad ist;
wobei der Hauptschlagbereich (106) Folgendes umfasst:
mindestens drei Blöcke (200) aus kohlenstofffaserverstärktem Polymer (CFK) mit einer konstanten Dicke über die axiale Erstreckung des Hauptschlagbereichs, wenn im Querschnitt betrachtet;
Blöcke (300) aus glasfaserverstärktem Polymer (GFK) mit einer konstanten Dicke über die axiale Erstreckung des Hauptschlagbereichs, wenn im Querschnitt betrachtet; und
eine neutrale Achse (350), die sich über die axiale Erstreckung des Hauptschlagbereichs erstreckt, wobei die neutrale Achse in der halben Gesamttiefe des Hauptschlagbereichs positioniert ist, wobei die Gesamttiefe des Hauptschlagbereichs gleich der Summe der Dicken der CFK-Blöcke (200) und der GFK-Blöcke (300) innerhalb des Hauptschlagbereichs ist;
wobei jeder der GFK-Blöcke zwischen zwei CFK-Blöcken positioniert ist; und
die Dicke mindestens eines der GFK-Blöcke sich von der Dicke eines anderen der GFK-Blöcke unterscheidet.

2. Triebwerk nach Anspruch 1, wobei die Anordnung der Dicken der GFK-Blöcke (300) und der CFK-Blöcke (200) symmetrisch um die neutrale Achse (350) des Hauptschlagbereichs ist.

3. Triebwerk nach Anspruch 1 oder 2, wobei die neutrale Achse (350) durch einen der GFK-Blöcke verläuft.

4. Triebwerk nach einem vorhergehenden Anspruch, wobei der Hauptschlagbereich (106) aus vier CFK-Blöcken (200) und drei GFK-Blöcken (300) besteht.

5. Triebwerk nach einem vorhergehenden Anspruch, wobei der dickste der GFK-Blöcke durch die neutrale Achse (350) zweigeteilt wird.

6. Triebwerk nach einem vorhergehenden Anspruch, wobei die GFK-Blöcke, die am weitesten von der neutralen Achse entfernt sind, die dünnsten der GFK-Blöcke (300) sind.

7. Triebwerk nach einem vorhergehenden Anspruch, wobei die CFK-Blöcke, die den dicksten der GFK-Blöcke einschließen, die gleiche Dicke wie der dickste der GFK-Blöcke aufweisen.

8. Triebwerk nach einem vorhergehenden Anspruch, wobei die GFK-Blöcke, die am weitesten von der neutralen Achse (350) entfernt sind, halb so dick wie der GFK-Block sind, der durch die neutrale Achse zweigeteilt wird.

9. Triebwerk nach einem vorhergehenden Anspruch, wobei alle CFK-Blöcke (200) die gleiche Dicke haben.

10. Triebwerk nach einem der Ansprüche 1 bis 8, wobei sich die Dicke mindestens eines der CFK-Blöcke von der Dicke eines anderen der CFK-Blöcke unterscheidet.

11. Triebwerk nach Anspruch 10, wobei die CFK-Blöcke, die am weitesten von der neutralen Achse entfernt sind, die dünnsten der CFK-Blöcke sind.

12. Triebwerk nach einem vorhergehenden Anspruch, wobei die GFK-Blöcke, die zu den CFK-Blöcken benachbart sind, die am weitesten von der neutralen Achse (350) des Hauptschlagbereichs (106) entfernt sind, die gleiche Dicke wie die CFK-Blöcke haben, die am weitesten von der neutralen Achse des Hauptschlagbereichs entfernt sind.

13. Triebwerk nach einem vorhergehenden Anspruch, wobei die CFK-Blöcke (200) und/oder die GFK-Blöcke (300) aus 2D-verwobenen Lagenbändern bestehen.

14. Luftfahrzeug, umfassend ein Triebwerk (10) nach einem vorhergehenden Anspruch.

## Revendications

1. Moteur (10) comprenant une soufflante (13) et un carter de soufflante (100), la soufflante (13) comprenant des pales de soufflante (400) qui présentent chacune un centre de gravité (CoG) (410) qui se trouve sur un plan CoG (420) de pale de soufflante, le carter de soufflante présentant un axe central (11), une extrémité avant, une extrémité arrière, et comprenant une région d'impact principale (106), la région d'impact principale présentant une étendue axiale par rapport à l'axe central du carter de soufflante de sorte que l'étendue axiale minimale de la région d'impact principale soit d'un premier plan frontière (450) à un second plan frontière (460), dans lequel le premier plan frontière (450) est un plan normal à l'axe central du carter de soufflante, s'étendant à partir des points où un plan limite avant (430) coupe une surface intérieure (110) de carter de soufflante, le plan limite avant (430) étant un plan conique, le sommet du cône étant le point où le plan CoG (420) de pale de soufflante coupe l'axe central (11) du carter de soufflante (100), le cône du plan limite avant (430) présentant un angle θ₁ par rapport au plan CoG (420) de pale de soufflante, où l'angle θ₁ est égal à 8 degrés, et dans lequel le second plan frontière (460) est un plan également normal à l'axe central du carter de soufflante, s'étendant à partir des points où un plan limite arrière (440) coupe une surface intérieure (110) de carter de soufflante, le plan limite arrière (440) étant un plan conique, le sommet du cône étant le point où le plan CoG (420) de pale de soufflante et le plan limite avant (430) coupent l'axe central (11) du carter de soufflante (100), le cône du plan limite arrière (440) présentant un angle θ₂ par rapport au plan CoG (420) de pale de soufflante, où l'angle θ₂ est égal à 9 degrés ;
la région d'impact principale (106) comprenant :
au moins trois blocs de polymère renforcé de fibres de carbone (CFRP) (200) présentant une épaisseur constante sur toute l'étendue axiale de la région d'impact principale lorsqu'ils sont vus en coupe transversale ;
des blocs de polymère renforcé de fibres de verre (GFRP) (300) présentant une épaisseur constante sur toute l'étendue axiale de la région d'impact principale lorsqu'ils sont vus en coupe transversale ; et
un axe neutre (350) s'étendant sur l'étendue axiale de la région d'impact principale, l'axe neutre étant positionné au niveau de la moitié de la profondeur totale de la région d'impact principale,
dans lequel la profondeur totale de la région d'impact principale est égale à la somme des épaisseurs des blocs CFRP (200) et des blocs GFRP (300) au sein de la région d'impact principale ;
dans lequel, chacun des blocs GFRP est positionné entre deux blocs CFRP ; et
l'épaisseur d'au moins un des blocs GFRP est différente de l'épaisseur d'un autre des blocs GFRP.

2. Moteur de la revendication 1, dans lequel l'agencement des épaisseurs des blocs GFRP (300) et des blocs CFRP (200) est symétrique par rapport à l'axe neutre (350) de la région d'impact principale.

3. Moteur de la revendication 1 ou 2, dans lequel l'axe neutre (350) passe à travers l'un des blocs GFRP.

4. Moteur d'une quelconque revendication précédente, dans lequel la région d'impact principale (106) est constituée de quatre blocs CFRP (200) et trois blocs GFRP (300).

5. Moteur d'une quelconque revendication précédente, dans lequel le plus épais des blocs GFRP est coupé en deux par l'axe neutre (350).

6. Moteur d'une quelconque revendication précédente, dans lequel les blocs GFRP les plus éloignés de l'axe neutre sont les plus minces des blocs GFRP (300).

7. Moteur d'une quelconque revendication précédente, dans lequel les blocs CFRP prenant en sandwich le plus épais des blocs GFRP sont de la même épaisseur que le plus épais des blocs GFRP.

8. Moteur d'une quelconque revendication précédente, dans lequel les blocs GFRP les plus éloignés de l'axe neutre (350) sont deux fois moins épais que le bloc GFRP coupé en deux par l'axe neutre.

9. Moteur d'une quelconque revendication précédente, dans lequel tous les blocs CFRP (200) sont de la même épaisseur.

10. Moteur de l'une quelconque des revendications 1 à 8, dans lequel l'épaisseur d'au moins un des blocs CFRP est différente de l'épaisseur d'un autre des blocs CFRP.

11. Moteur de la revendication 10, dans lequel les blocs CFRP les plus éloignés de l'axe neutre sont les plus minces des blocs CFRP.

12. Moteur d'une quelconque revendication précédente, dans lequel les blocs GFRP adjacents aux blocs CFRP les plus éloignés de l'axe neutre (350) de la région d'impact principale (106) sont de la même épaisseur que les blocs CFRP les plus éloignés de l'axe neutre de la région d'impact principale.

13. Moteur d'une quelconque revendication précédente, dans lequel les blocs CFRP (200) et/ou les blocs GFRP (300) sont composés de rubans de feuille entrelacés en 2D.

14. Aéronef comprenant un moteur (10) d'une quelconque revendication précédente.
